Europäisches Patentamt

European Patent Office

Office européen des brevets

(11) Veröffentlichungsnummer: **0 355 558 A1**

## (12) EUROPÄISCHE PATENTANMELDUNG

(21) Anmeldenummer: **89114591.4**

(22) Anmeldetag: **07.08.89**

(51) Int. Cl.4: **H01B 3/00 , H02K 3/30 , H01F 27/32**

(30) Priorität: **18.08.88 DE 3828092**

(43) Veröffentlichungstag der Anmeldung:
**28.02.90 Patentblatt 90/09**

(84) Benannte Vertragsstaaten:
**CH DE FR LI SE**

(71) Anmelder: **Siemens Aktiengesellschaft**
**Wittelsbacherplatz 2**
**D-8000 München 2(DE)**

(72) Erfinder: **Rogler, Wolfgang, Dr.**
**Frankenstrasse 44**
**D-8521 Möhhrendorf(DE)**
Erfinder: **Ihlein, Walter, Dr.**
**Glockenturmstrasse 36**
**D-1000 Berlin 19(DE)**
Erfinder: **Suchardt, Günter, Chem.-Ing.**
**Wilskistrasse 35**
**D-1000 Berlin 37(DE)**

(54) **Isolierband zur Herstellung einer imprägnierten Isolier-hülse für elektrische Leiter.**

(57) Ein Isolierband auf der Basis von durchschlagsfestem anorganischem Material und einer Bindemittel-Beschleuniger-Mischung soll in der Weise ausgestaltet werden, daß daraus mittels heißhärtender Tränkharze Isolierhülsen für elektrische Leiter mit verbesserten thermisch-mechanischen Eigenschaften hergestellt werden können.

Zu diesem Zweck ist die Bindemittel-Beschleuniger-Mischung ein Gemisch aus einem Epoxidharz/(Meth)-acrylsäure-Addukt, einem Bismaleinimidharz und einem Addukt aus einem sekundären Amin und einem polyfunktionellen (Meth)acrylsäureester, das gegebenenfalls ein organisches Peroxid enthält. Es eignet sich für Wicklungsstäbe und Spulen für elektrische Maschinen.

EP 0 355 558 A1

## Isolierband zur Herstellung einer imprägnierten Isolierhülse für elektrische Leiter

Die Erfindung betrifft ein Isolierband zur Herstellung einer mit einem Tränkharz in Form einer heißhärtenden Reaktionsharzmischung imprägnierten Isolierhülse für elektrische Leiter, insbesondere für die Wicklungsstäbe bzw. Spulen elektrischer Maschinen, bestehend aus auf eine flexible Unterlage aufgebrachtem flächigem, durchschlagsfestem anorganischem Material, beispielsweise Glimmerblättchen oder Feinglimmerschichten das mit der Unterlage und miteinander und gegebenenfalls mit einer abschließenden Decklage mittels eines Bindemittels verklebt ist, welches einen die Härtungsreaktion des Tränkharzes anregenden Beschleuniger enthält, wobei die Bindemittel-Beschleuniger-Mischung ein bei der Härtungstemperatur des Tränkharzes selbsthärtendes System bildet.

Derartige Isolierbänder, wie sie beispielsweise aus den deutschen Patentschriften 18 01 053, 21 42 571 und 30 03 477 für die Imprägnierung mit Epoxidharz-Säureanhydridhärter-Mischungen bekannt sind, ermöglichen eine wirtschaftliche Durchführung der Tränkung, da ein reaktionsträges Tränkharz verwendet werden kann, das auch bei den eine gute Durchimprägnierung der Isolierhülse gewährleistenden Tränktemperaturen praktisch keiner Veränderung der Viskosität unterliegt. Dies ist erforderlich, weil jeweils nur ein geringer Anteil der als Tränkharz verwendeten Reaktionsharzmischung in die Isolierhülse eindringt, während der Rest wieder für eine neue Tränkung verwendet werden muß. Das Isolierband enthält deshalb einen die Härtungsreaktion des Tränkharzes anregenden Beschleuniger, damit der in die Isolierhülse eingedrungene Tränkharzanteil in wirtschaftlich vertretbarer Zeit aushärtet.

Damit die Isolierbänder vor der Tränkung lange gelagert werden können, ist bei dem Isolierband nach der DE-PS 18 01 053 die Bindemittel-Beschleuniger-Mischung so gewählt, daß bei Raumtemperatur praktisch keine Härtung dieser Mischung eintritt. Außerdem bildet die Bindemittel-Beschleuniger-Mischung ein selbsthärtendes System, das allerdings erst bei den wesentlich über der Raumtemperatur liegenden Härtungstemperaturen des Tränkharzes selbsthärtet. Dadurch wird vermieden, daß zwischen großflächige Schichten des durchschlagsfesten anorganischen Materials eingedrungenes Bindemittel, das nicht vollständig vom Tränkharz resorbiert werden konnte, ungehärtet in der Isolierung verbleibt.

Bei den Isolierbändern nach der DE-PS 21 42 571 werden als Bindemittel cycloaliphatische Epoxidharze verwendet, bei denen die Epoxidgruppen durch Sauerstoffanlagerung an ringständige Doppelbindungen entstanden sind und die, wie allgemein bekannt, mit Aminhärtern bzw. Beschleunigern keine oder nur eine stark verzögerte Reaktion zeigen. Bei Zusatz des Epoxid/Säureanhydrid-Tränkharzes entwickeln diese Beschleuniger jedoch ihre volle katalytische Aktivität; Glycidylether-, Glycidylester-oder N-Glycidyl-Epoxidharze zeigen diese unterschiedlichen Reaktivitäten nicht. Cycloaliphatische Epoxidharze lassen sich aber nur schwierig herstellen und geeignete Harze haben außerdem den Nachteil, daß sie - nach neueren Untersuchungen - physiologisch nicht unbedenklich sind.

Diesem Umstand wird beim Isolierband nach der DE-PS 30 03 477 dadurch Rechnung getragen, daß den als Bindemittel verwendeten Glycidyletherharzen quaternäre Oniumsalze als Beschleuniger zugesetzt werden. Ein gemäß diesem Stand der Technik aufgebautes Isolierband kann bei Raumtemperatur mehr als drei Monate gelagert werden, durch eine Feuchtigkeitsaufnahme des Bandes, bedingt durch die Hygroskopizität der Oniumsalze, kann jedoch die Einsatzfähigkeit des Bandes eingeschränkt sein.

Die aus der vorstehend bereits genannten DE-PS 18 01 053 bekannten Glimmerbänder, d.h. Isolierbänder, weisen als Bindemittel polymerisierbare Addukte aus sauren Komponenten, die mindestens eine radikalisch polymerisierbare Doppelbindung enthalten, und Epoxidverbindungen auf. Über die bei der Addition entstehenden Hydroxylgruppen ist eine Verankerung des Bindemittels im heißhärtenden Imprägnierharzsystem auf Epoxidharzbasis möglich. Durch Zusatz geeigneter organischer Peroxide zum Bindemittel lassen sich die zur Polymerisation fähigen Doppelbindungen radikalisch polymerisieren, wodurch eine Selbsthärtung des Bandklebers erreicht wird. Als Beschleuniger für das Tränkharz enthält dieser Bandkleber insbesondere Zinksalze ungesättigter, polymerisierbarer saurer Verbindungen.

Noch nicht voll zufriedenstellend nach heutigen Anforderungen sind bei den aus dem genannten Stand der Technik bekannten Klebharzen jedoch die thermisch-mechanischen Eigenschaften sowohl des reinen gehärteten Klebharzes als auch des bei der Härtung entstehenden Formstoffes aus heißhärtendem Tränkharz und Glimmerbandkleber. So weist ein typischer Formstoff aus reinem Klebharz, wie er in der DE-PS 18 01 053 beschrieben ist, eine Martenstemperatur von ca. 95°C auf; der Wert für einen Formstoff aus einer geeigneten Epoxid/Säureanhydrid-Imprägnierharzmischung und dem Bandkleber liegt nur geringfügig höher. Die bekannten Klebharze bzw. die daraus hergestellten Glimmerbänder sind deshalb nur für die Herstellung von Isolierhülsen der Isolierstoffklasse B geeignet.

Bei rotierenden Maschinen liefert die Steifigkeit der Stirnseitenisolierung einen Beitrag zur Gesamtsteifigkeit des Wickelkopfes und ist somit mitbestimmend für Verformungen des Wickelkopfes, beispielsweise bei Umschaltvorgängen oder beim Kurzschluß. Je geringer diese Verformungen sind, d.h. je steifer die Isolierhülse ist, um so geringer ist aber in diesem Bereich die Gefahr von Beschädigungen durch Rißbildung.

Heutiger Stand der Technik sind beispielsweise Hochspannungsmotoren, die thermisch bis zu 155 °C (Isolierstoffklasse F) belastet werden. Dafür sind jedoch Reaktionsharzformstoffe mit Martenstemperaturen < 100 °C wenig geeignet, da sonst aufwendige Zusatzmaßnahmen zur Verstärkung erforderlich sind.

Aufgabe der Erfindung ist est, ein Isolierband der eingangs genannten Art mit einem Bandkleber, d.h. Bindemittel, auf epoxidfreier Basis bereitzustellen, das mit heißhärtenden Epoxidtränkharzen zu einer Isolierhülse mit verbesserten thermischmechanischen Eigenschaften, insbesondere höherer Steifigkeit, führt.

Dies wird erfindungsgemäß dadurch erreicht, daß die Bindemittel-Beschleuniger-Mischung ein Gemisch aus einem Epoxidharz/(Meth)acrylsäure-Addukt, einem Bismaleinimidharz und einem Addukt aus einem sekundären Amin und einem polyfunktionellen (Meth)acrylsäureester ist, das gegebenenfalls ein organisches Peroxid enthält.

Das in der Bindemittel-Beschleuniger-Mischung enthaltene Epoxidharz/(Meth)acrylsäure-Addukt weist keine (freien) Epoxidgruppen auf. Es liegt somit ein epoxidfreies Gemisch vor, das radikalisch härtet. Da die Polymerisation radikalisch abläuft, ist dieses Gemisch, d.h. das Klebharz, auch gegen die darin enthaltene aminische Komponente, d.h. das Addukt aus sekundärem Amin und polyfunktionellem (Meth)-acrylsäureester, inert. Die aminische Komponente ist somit weitgehend ohne Einfluß auf die Lagerstabilität des Klebharzes.

Die Epoxidharz/(Meth)acrylsäure-Addukte sind Umsetzungsprodukte aus Epoxidharzen und Acryl- bzw. Methacrylsäure, wobei die Epoxidharze vorzugsweise Novolak-Epoxidharze sind. Die Umsetzung erfolgt dabei in Gegenwart eines Katalysators, der bevorzugt ein tertiäres Amin ist, bei Temperaturen um 70 °C. Diese Umsetzung und die Eigenschaften der hierbei erhaltenen Produkte sind beispielsweise in der US-PS 3 179 623 beschrieben. Für den Gegenstand der vorliegenden Patentanmeldung ist dabei wichtig, daß die Umsetzung erst dann beendet wird, wenn keine Epoxidfunktionalität mehr nachweisbar ist.

Die Bindemittel-Beschleuniger-Mischung enthält ferner ein Bismaleinimidharz. Dieses Bismaleinimidharz weist vorzugsweise zwischen den Imidstickstoffatomen eine aromatische Gruppierung auf. Derartige Verbindungen werden durch Umsetzung von aromatischen Diaminen mit Maleinsäureanhydrid hergestellt. Das Bismaleinimidharz ist dabei vorzugsweise N.N'-(Methylendi-p-phenylen)-bismaleinimid, das im übrigen im Handel erhältlich ist.

Das in der Bindemittel-Beschleuniger-Mischung enthaltene Addukt aus sekundärem Amin und polyfunktionellem (Meth)acrylsäureester, die aminische Komponente, dient als Beschleuniger bei der Härtung des Tränkharzes. Derartige Addukte können nach bekannten Verfahren hergestellt werden, wobei eine oder mehrere der (Meth)acrylatfunktionen des (Meth)acrylsäureesters mit dem sekundären Amin umgesetzt werden. Vorzugsweise weisen die Addukte dabei noch freie (Meth)acrylatfunktionen auf, da derartige Beschleuniger in den bei der Härtung des Tränkharzes entstehenden Formstoff eingebaut werden. Werden dagegen alle (Meth)acrylatfunktionen mit sekundärem Amin umgesetzt, so erhält man nichteinbaubare Beschleuniger.

Zur Herstellung der Addukte aus sekundärem Amin und polyfunktionellem (Meth)acrylsäureester, d.h. des Beschleunigers, können als sekundäre Amine alle für die Härtung von Epoxidtränkharzsystemen geeigneten Amine dienen. Dies sind beispielsweise NH-funktionelle Imidazole, wie 2-Phenylimidazol, Pyrrolidin, Piperidin, N-Alkylpiperazine und Morpholin sowie N-Methyloctylamin, Methylbenzylamin, N-Methylanilin und Diphenylamin. Vorzugsweise werden dabei NH-funktionelle Imidazole, N-Alkylpipe razine und Morpholin eingesetzt.

Als polyfunktioneller (Meth)acrylsäureester dient bei der Herstellung der Addukte vorzugsweise Trimethylolpropantri(meth)acrylat. Sekundäres Amin und Trimethylolpropantri(meth)acrylat werden dabei im Verhältnis von 0,1:1 bis 3:1 eingesetzt; vorzugsweise beträgt das molare Verhältnis etwa 1:1 bis 2:1.

Die Bindemittel-Beschleuniger-Mischung enthält vorteilhaft ein organisches Peroxid; der Peroxidgehalt beträgt dabei im allgemeinen 0,1 bis 6 Gew.-%, vorzugsweise 0,5 bis 3 Gew.-%, jeweils bezogen auf das Gewicht der Bindemittel-Beschleuniger-Mischung. Durch den Zusatz von organischen Peroxiden läßt sich das Klebersystem nämlich selbsthärtend einstellen. Nach dem Tränkungs-und Gelierungsprozeß ins Tränkharz nicht eingebaute Klebharzanteile lassen sich bei der Verwendung von Peroxiden mit geeigneter Zerfallscharakteristik bei der Nachhärtung der Isolierhülsen, beispielsweise von Wicklungsisolierungen, radikalisch aushärten. Auf diese Weise wird vermieden, daß in der Isolierung thermoplastische Bereich zurückbleiben. Bei Tränktemperaturen ≤ 70 °C und Nachhärtungstemperaturen von maximal 160 °C hat sich beispielsweise Bis(tert.-butylperoxiisopropyl)-benzol als geeignet erwiesen. Es ist aber auch möglich, die Polymerisation nur durch Zufuhr thermischer Energie auszulösen, d.h. ohne Peroxid.

EP 0 355 558 A1

Der Anteil des Epoxidharz/(Meth)acrylsäure-Adduktes in der Bindemittel-Beschleuniger-Mischung beträgt vorteilhaft 30 bis 70 %, vorzugsweise 40 bis 60 %. Der Anteil des Bismaleinimidharzes beträgt vorteilhaft 5 bis 30 %, vorzugsweise 10 bis 20 %. Der Anteil des Adduktes aus sekundärem Amin und polyfunktionellem (Meth)acrylsäureester beträgt in dieser Mischung vorteilhaft 5 bis 50 %, vorzugsweise 20 bis 40 %. Die Anteile der einzelnen Komponenten ergänzen sich dabei jeweils zu 100 %. Um einerseits eine optimale Wirkung des Bandklebers und andererseits beim Tränkprozeß eine optimale Durchmischung zwischen Tränkharz und Bandkleber zu erreichen, ist eine optimale Viskosität des Klebersystems Voraussetzung. Deshalb wird der Bindemittel-Beschleuniger-Mischung vorteilhaft ein Reaktivverdünner zugesetzt. Als Reaktivverdünner dient dabei vorzugsweise ein Polyacrylat, insbesondere Trimethylolpropantri(meth)-acrylat. Der Anteil des Reaktivverdünners beträgt im allgemeinen 5 bis 25 %, bezogen auf die Bindemittel-Beschleuniger-Mischung.

Bei der Herstellung des Isolierbandes wird der Anteil an Bindemittel nicht zu hoch gewählt, damit bei der Imprägnierung das Tränkharz gut in die im Isolierband vorhandenen Hohlräume eindringen kann. Der Gewichtsanteil des Bindemittels beträgt deshalb zwischen 3 und 20 %, bezogen auf das Gesamtgewicht des Isolierbandes. Bei einem derartigen Bindemittelanteil liegt der Anteil an Beschleuniger vorteilhaft im Bereich zwischen 0,15 und 8 %, bezogen auf das Gesamtgewicht des Isolierbandes. Die Menge an Beschleuniger hängt dabei davon ab, wieviel anorganisches Material, wie Glimmer, sich auf der Unterlage (des Isolierbandes) befindet und wie hoch der Anteil des Bindemittels im Isolierband ist. Als Unterlage, d.h. als Träger für das anorganische Material, dient im übrigen Glasgewebe, Aramidpapier ("Aramide" sind aromatische Polyamide aus aromatischen Diaminen und Arylendicarbonsäuren), Polyimidfolie oder Polyestervlies.

Zur Herstellung einer Isolierhülse für elektrische Leiter, beispielsweise für die Wicklungsstäbe einer elektrischen Maschine, wird das Isolierband nach der Erfindung, das im übrigen bei Raumtemperatur mehr als 6 Monate lagerfähig ist, um die Wicklungsstäbe gewickelt. Die "trockene" Wicklung (70 °C/Vakuum) wird dann mit einem Tränkharz imprägniert. Die Imprägnierung erfolgt dabei vorzugsweise nach der sogenannten VPI-Technik, d.h. durch Vakuum-Druck-Imprägnierung. Als Tränkharz können Epoxidharzmischungen auf Basis polyfunktioneller aromatischer Epoxidverbindungen dienen, entweder zusammen mit Säureanhydriden oder zusammen mit polyfunktionellen aromatischen Isocyanaten. Als Mischungskomponenten können dabei auch aliphatische oder cycloaliphatische Glycidylether und Glycidylester sowie auch ungesättigte Polymere und Monomere eingesetzt werden. Durch die Verwendung der erfindungsgemäßen Bindemittel-Beschleuniger-Mischung wird gewährleistet, daß bei der Härtung der Isolierhülse, d.h. bei der Härtung des Tränkharzes, alle Stellen ausgehärtet werden.

Eine aus dem Isolierband nach der Erfindung hergestellte Isolierhülse weist ausgezeichnete thermisch-mechanische Eigenschaften auf. Diese Eigenschaften beruhen hauptsächlich auf der im Klebharz enthaltenen aminischen Komponente, die zur Härtung des Tränkharzes dient, und auf dem Bismaleinimidharz sowie auf den im Klebharz vorhandenen OH-Funktionen, die bei der Härtung zu einem chemischen Verbund zwischen Klebharz und Tränkharz führen. Von Vorteil ist ferner, daß das erfindungsgemäße Klebharz aus in toxikologischer Hinsicht unbedenklichen Komponenten aufgebaut ist.

Anhand von Ausführungsbeispielen soll die Erfindung noch näher erläutert werden.


Beispiel 1


Herstellung einbaubarer Beschleuniger

Zur Herstellung von in das Tränkharz einbaubaren Beschleunigern werden sekundäre Amine mit Trimethylolpropantriacrylat (TMPTA) umgesetzt. Dazu wird mit 0,2 % Hydrochinon stabilisiertes TMPTA vorgelegt und bei Temperaturen von 50 bis 90 °C das jeweilige Amin in der Weise zudosiert, daß die Reaktionstemperatur ohne Heizen gehalten werden kann. Nach dem Abklingen der leicht exothermen Reaktion wird noch 24 h bei 60 °C gerührt. Die einge setzten sekundären Amine, das Amin:TMPTA-Molverhältnis und die Viskosität der Reaktionsprodukte sind in Tabelle 1 zusammengefaßt.

4

Tabelle 1

| Amin (Abkürzung) | Molverhältnis Amin:TMPTA | Viskosität in mPa.s (bei 25°C) |
|---|---|---|
| 2-Isopropylimidazol (2-II) | 1 | 5550 |
| Morpholin (M) | 1 | 900 |
| Piperidin (P) | 0,9 | 1300 |
| 1-Ethylpiperazin (1-EP) | 0,9 | 1070 |
| 2-Phenylimidazol (2-PI) | 0,9 | 14800 |
| 2-Methylimidazol (2-MI) | 0,9 | - |

Beispiel 2

Herstellung und Untersuchung von Bindemittel-Beschleuniger-Mischungen

Aus einem Addukt aus Epoxinovalak und (Meth)acrylsäure und dem Bismaleinimidharz N.N'-(Methylendi-p-phenylen)-bismaleinimid lassen sich bis zu einem Verhältnis von 4:1 Masseteilen (MT) stabile, homogene Mischungen herstellen. Derartige Mischungen dienten als Basis zur Herstellung von Bindemittel-Beschleuniger-Mischungen.

Um eine optimale Reaktivität (Gelzeit) und Viskosität zu erreichen, wurden zur Herstellung der Klebharze 4:1-Mischungen eines Epoxinovolak/Methacrylsäure-Adduktes ("Harz II") und N.N'-(Methylendi-p-phenylen)-bismaleinimid ("Harz I") mit unterschiedlichen Mengen an TMPTA und TMPTA/I-EP bzw. TMPTA/2-PI versetzt. Dabei wurde das Epoxinovolak/Methacrylsäure-Addukt vorgelegt, mit 0,5 % Hydrochinon versetzt und unter Rühren auf eine Temperatur von 80 bis 90°C erwärmt. Bei dieser Temperatur wurde das Bismaleinimidharz innerhalb 1 h portionsweise zugegeben und - je nach Ansatz - wurde insgesamt 4 bis 6 h gerührt. Anschließend wurde TMPTA bzw. das TMPTA/Amin-Addukt zudosiert und nochmals 2 bis 3 h gerührt, bis alle Komponenten homogen gemischt waren.

Die Zusammensetzung der auf diese Weise hergestellten Klebharze, d.h. der Bindemittel-Beschleuniger-Mischungen, die Viskosität dieser Mischungen und deren Reaktivität, d.h. die Gelzeiten, in einem Tränkharz auf der Basis Epoxid/Säureanhydrid sind in Tabelle 2 zusammengefaßt.

Die Gelzeiten eines Klebharzes in einem Epoxid/Isocyanat-Tränkharz (EP-IC-Harz) sind in entsprechender Weise in Tabelle 3 wiedergegeben.

Tabelle 2

| Klebharz Nr. | Klebharzzusammensetzung (MT) | | | | | Viskosität in mPa.s (bei 70 °C) | Gelzeiten[1] im Tränkharz[2] in min bei | | | |
|---|---|---|---|---|---|---|---|---|---|---|
| | TMPTA/1-EP | TMPTA/2-PI | TMPTA | Harz I | Harz II | | 70 °C | 90 °C | 110 °C | 130 °C |
| 1 | 15 | - | 15 | 10 | 40 | 6000 | 130 | 48 | 15 | 4 |
| 2 | - | 15 | 15 | 10 | 40 | 10100 | 79 | 29 | 10 | 3 |
| 3 | 17,5 | - | 12,5 | 10 | 40 | 6700 | 125 | 37 | 10 | 4 |
| 4 | 20 | - | 10 | 10 | 40 | 6800 | 116 | 35 | 11 | 4 |
| 5 | 25 | - | 5 | 10 | 40 | 11100 | 93 | 30 | 10 | 3 |
| 6 | 30 | - | - | 10 | 40 | 15700 | 83 | 22 | 7 | - |
| 7 | 30 | - | - | - | 50 | 2760 | 75 | - | - | - |

[1] Kofler-Heizbank
[2] Tränkharzzusammensetzung: Bisphenol A-Diglycidylether/Methylhexahydrophthalsäureanhydrid
Verhältnis Tränkharz:Klebharz = 100:20 (MT)

Tabelle 3

| Klebharz Nr. | Klebharzzusammensetzung (MT) | | | | Gelzeiten[1] im Tränkharz[3] in min bei | | |
|---|---|---|---|---|---|---|---|
| | TMPTA/1-EP | TMPTA | Harz I | Harz II | 20 °C | 30 °C | 50 °C |
| 4 | 20 | 10 | 10 | 40 | 50 | 30 | 9 |

[1] Kofler Heizbank
[2] Tränkharzzusammensetzung: Bisphenol A-Diglycidylether/Methylhexahydrophthalsäureanhydrid Verhältnis Tränkharz:Klebharz = 100:20 (MT)
[3] Tränkharzzusammensetzung: Bisphenol A-Diglycidylether/Diphenylmethandiisocyanat (EP:IC = 1:4) Verhältnis Tränkharz:Klebharz = 100:2 (MT)

Beispiel 3

Herstellung und Untersuchung von Formstoffen aus Tränkharz und Klebharz

Zur Untersuchung des Einflusses der Zusammensetzung der Klebharze auf die Formstoffeigenschaften wurden Normstäbe aus Klebharz und einem säureanhydridhärtbaren Epoxidharz (EP/SA) bzw. einem isocyanathärtbaren Epoxidharz (EP/IC) hergestellt. Dazu wurden im einen Fall 100 MT vorgemischtes EP/SA-Tränkharz auf 50 °C erwärmt und mit 0,4 MT Bis(tert.-butylperoxiisopropyl)-benzol (2 %, bezogen auf das Klebharz) versetzt. Anschließend wurden bei 50 °C unter Rühren 20 MT Klebharz zugegeben. Die Harzmischung wurde dann im Vakuumtrockenschrank bei ca. 50 mbar vorentgast und in bei 80 °C/16 h vorkonditionierte Normstabformen gegossen. Die vergossenen Normstabformen wurden im Vakuumtrockenschrank nochmals kurz entgast und anschließend wurde gehärtet.

Bei der Verwendung des EP-IC-Tränkharzes wurden 100 MT des vorgemischten Harzes bei 50 °C im Vakuum entgast. Nach dem Abkühlen auf Raumtemperatur wurden dem Harz unter Rühren 0,4 MT Bis-(tert.-butylperoxiisopropyl)-benzol und 2 MT Klebharz zugegeben, und dann wurde die Harzmischung in - in entsprechender Weise vorkonditionierte - Normstabformen gegossen und entsprechend gehärtet.

6

EP 0 355 558 A1

Aus Tabelle 4 sind die Zusammensetzung der Tränkharze und die Härtungsbedingungen sowie die Martenstemperatur der Formstoffe ersichtlich, die an Dynstat-Proben ermittelt wurde.

Tabelle 4

| Klebharz Nr. | Tränkharz | Martenstemperatur in °C |
|---|---|---|
| 1 | EP/SA[1] | 124 |
| 2 | EP/SA[1] | 120 |
| 4 | EP/SA[1] | 119 |
| 4 | EP/IC[2] | 172 |

[1] Tränkharzzusammensetzung: Bisphenol A-Diglycidylether/Methylhexahydrophthalsäureanhydrid; Härtungsbedingungen: 2 h 80°C, 16 h 130°C, 16 h 160°C.

[2] Tränkharzzusammensetzung: Bisphenol A-Diglycidylether/Diphenylmethandiisocyanat (EP:IC = 1:1) Härtungsbedingungen: 4 h 20°C, 8 h 140°C, 16 h 200°C.

Beispiel 4

Lagerung von Isolierbändern

Zur Untersuchung der Lagerfähigkeit bzw. Lagerstabilität von Isolierbändern nach der Erfindung wurden - unter Verwendung des Klebharzes Nr. 1 hergestellte - Isolierbänder auf der Basis Glasseide/Glimmer unter verschiedenen Bedingungen gelagert, und dann wurde der lösliche Anteil durch Extraktion mit Aceton bestimmt. Die Extraktionsergebnisse sind in Tabelle 5 zusammengefaßt.

Tabelle 5

| Lagerzeit | löslicher Anteil in % | unlöslicher Anteil in % |
|---|---|---|
| 7 Monate bei RT | 71 | 29 |
| 7 Monate bei +5°C | 89 | 11 |
| 12 Monate bei RT | 67 | 33 |
| 12 Monate bei -18°C | 69 | 31 |

**Ansprüche**

1. Isolierband zur Herstellung einer mit einem Tränkharz in Form einer heißhärtenden Reaktionsharzmischung imprägnierten Isolierhülse für elektrische Leiter, insbesondere für die Wicklungsstäbe bzw. Spulen elektrischer Maschinen, bestehend aus auf eine flexible Unterlage aufgebrachtem flächigem, durchschlagsfestem anorganischem Material, beispielsweise Glimmerblättchen oder Feinglimmerschichten, das mit der Unterlage und miteinander und gegebenenfalls mit einer abschließenden Decklage mittels eines Bindemittels verklebt ist, welches einen die Härtungsreaktion des Tränkharzes anregenden Beschleuniger enthält, wobei die Bindemittel-Beschleuniger-Mischung ein bei der Härtungstemperatur des Tränkharzes selbsthärtendes System bildet, **dadurch gekennzeichnet,** daß die Bindemittel-Beschleuniger-Mischung ein Ge-

7

misch aus einem Epoxidharz/(Meth)acrylsäure-Addukt, einem Bismaleinimidharz une einem Addukt aus einem sekundären Amin und einem polyfunktionellen (Meth)acrylsäureester ist, das gegebenenfalls ein organisches Peroxid enthält.

2. Isolierband nach Anspruch 1, **dadurch gekennzeichnet,** daß das Epoxidharz ein Novolak-Epoxidharz ist.

3. Isolierband nach Anspruch 1 oder 2, **dadurch gekennzeichnet,** daß das Bismaleinimidharz zwischen den Imid-Stickstoffatomen eine aromatische Gruppierung aufweist und vorzugsweise N.N'-(Methylendi-p-phenylen)-bismaleinimid ist.

4. Isolierband nach einem der Ansprüche 1 bis 3, **dadurch gekennzeichnet,** daß das Addukt aus sekundärem Amin und polyfunktionellem (Meth)acrylsäureester freie (Meth)acrylatfunktionen aufweist.

5. Isolierband nach einem oder mehreren der Ansprüche 1 bis 4, **dadurch gekennzeichnet,** daß das sekundäre Amin ein NH-funktionelles Imidazol, ein N-Alkylpiperazin oder Morpholin ist.

6. Isolierband nach einem oder mehreren der Ansprüche 1 bis 5, **dadurch gekennzeichnet,** daß der polyfunktionelle (Meth)acrylsäureester Trimethylolpropantri(meth)acrylat ist.

7. Isolierband nach einem oder mehreren der Ansprüche 1 bis 6, **dadurch gekennzeichnet,** daß der Anteil des Epoxidharz/(Meth)acrylsäure-Adduktes in der Bindemittel-Beschleuniger-Mischung 30 bis 70 % beträgt, derjenige des Bismaleinimidharzes 5 bis 30 % und derjenige des Adduktes aus sekundärem Amin und polyfunktionellem (Meth)acrylsäureester 5 bis 50 %.

8. Isolierband nach einem oder mehreren der Ansprüche 1 bis 7, **dadurch gekennzeichnet,** daß das organische Peroxid Bis(tert.-butylperoxiisopropyl)-benzol ist.

9. Isolierband nach einem oder mehreren der Ansprüche 1 bis 8, **dadurch gekennzeichnet,** daß der Peroxidgehalt der Bindemittel-Beschleuniger-Mischung 0,1 bis 6 % beträgt.

10. Isolierband nach einem oder mehreren der Ansprüche 1 bis 9, **dadurch gekennzeichnet,** daß dem Gemisch ein Reaktivverdünner zugesetzt ist, vorzugsweise Trimethylolpropantri(meth)acrylat.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ⁴5 |
|---|---|---|---|
| A | <u>US - A - 4 335 367</u> (MITSUI et al.) * Zusammenfassung; Spalte 3, Zeile 12 - Spalte 8, Zeile 68 * -- | 1-3,7, 9 | H 01 B 3/00 H 02 K 3/30 H 01 F 27/32 |
| D,A | <u>DE - B1 - 2 142 571</u> (SIEMENS) * Spalte 3, Zeile 6 - Spalte 4, Zeile 62 * ---- | 1,5,7 | |

| | RECHERCHIERTE SACHGEBIETE (Int. Cl.⁴)5 |
|---|---|
| | H 01 B 3/00 H 02 K H 01 F B 32 B |

Der vorliegende Recherchenbericht wurde für alle Patentansprüche erstellt.

| Recherchenort | Abschlußdatum der Recherche | Prüfer |
|---|---|---|
| WIEN | 03-11-1989 | KUTZELNIGG |